# EUROPÄISCHE PATENTSCHRIFT

(11) **EP 2 123 023 B1**
(45) Veröffentlichungstag und Bekanntmachung des Hinweises auf die Patenterteilung: **11.11.2015**
(21) Anmeldenummer: 07857037.1
(22) Anmeldetag: 21.12.2007
(51) Int. Cl.: H04N 5/225, F16P 3/14

(54) **KAMERAEINHEIT ZUM ÜBERWACHEN EINES RAUMBEREICHS, INSBESONDERE ALS TEIL EINER MITLAUFENDEN SCHUTZEINRICHTUNG AN EINEM BEWEGTEN MASCHINENTEIL**
CAMERA UNIT FOR MONITORING A ROOM REGION, PARTICULARLY AS PART OF A CONCURRENTLY RUNNING SAFETY DEVICE ON A MOVING MACHINE PART
ENSEMBLE DE CAMÉRA POUR SURVEILLER UNE ZONE SPATIALE, NOTAMMENT COMME PARTIE D'UN DISPOSITIF DE PROTECTION CONJOINTEMENT DÉPLACÉ SUR UNE PARTIE DE MACHINE EN MOUVEMENT

(30) Priorität: 22.01.2007 DE 102007004724
(43) Veröffentlichungstag der Anmeldung: 25.11.2009
(73) Patentinhaber: Pilz GmbH & Co. KG, 73760 Ostfildern (DE)
(72) Erfinder: VEIT, Andreas, 70794 Filderstadt (DE)
(74) Vertreter: Witte, Weller & Partner Patentanwälte mbB
(86) Internationale Anmeldenummer: PCT/EP2007/011314
(87) Internationale Veröffentlichungsnummer: WO 2008/089836

(56) Entgegenhaltungen:
- EP-A- 1 291 573
- DE-A1- 3 622 843
- JP-A- 2006 332 894

## Beschreibung

Die vorliegende Erfindung betrifft eine Kameraeinheit zum Überwachen eines Raumbereichs, insbesondere als Teil einer mitlaufenden Schutzeinrichtung an einem bewegten Maschinenteil, mit einem elektronischen Bildsensor, der auf einem Bauteilträger angeordnet ist, mit einem Objektiv, das einen Objektivkörper aufweist, an dem zumindest ein optisches Element befestigt ist, und mit einem ersten Koppelstück, über das der Objektivkörper und der Bauteilträger zu einer integrierten Baueinheit verbunden sind, wobei das erste Koppelstück in der integrierten Baueinheit zumindest eine begrenzte erste Beweglichkeit relativ zu dem Objektivkörper und zumindest eine begrenzte zweite Beweglichkeit relativ zu dem Bauteilträger besitzt, und bei der die integrierte Baueinheit zumindest einen ersten und einen zweiten lösbaren Spannmechanismus aufweist, um das erste Koppelstück, den Objektivkörper und den Bauteilträger relativ zueinander zu fixieren.

Eine solche Kameraeinheit ist prinzipiell aus DE 36 22 843 A1 bekannt. DE 36 22 843 A1 offenbart allerdings nicht die Verwendung der bekannten Kameraeinheit als Teil einer mitlaufenden Schutzeinrichtung an einem bewegten Maschinenteil.

Die Erfindung betrifft ferner eine Vorrichtung zum Absichern einer Maschine mit einem ersten und einem zweiten Maschinenteil, wobei das erste Maschinenteil eine Arbeitsbewegung relativ zu dem zweiten Maschinenteil ausführt, insbesondere zum Absichern eines stationären Press-, Stanz- oder Schneidwerkzeuges, mit einer Lichtquelle, mit einer Kameraeinheit, und mit einer Steuereinheit, wobei die Kameraeinheit so an dem ersten Maschinenteil befestigt ist, dass sie bei der Arbeitsbewegung des ersten Maschinenteils mitgeführt wird und dabei einen vor dem ersten Maschinenteil aufliegenden Raumbereich aufnimmt, wobei die Lichtquelle gegenüber von der Kameraeinheit so angeordnet ist, dass sie die Kameraeinheit beleuchtet, und wobei die Steuereinheit dazu ausgebildet ist, die Arbeitsbewegung des ersten Maschinenteils in Abhängigkeit von einem von der Kameraeinheit erzeugten Signal zu stoppen.

Eine solche Vorrichtung wird in der Praxis als mitlaufende Schutzeinrichtung zum Absichern einer Maschine mit gegeneinander bewegten Maschinenteilen bezeichnet. Ein Beispiel für eine solche Schutzeinrichtung mit einer Kameraeinheit ist aus einer Bedienungsanleitung der Firma Sick AG, Deutschland bekannt, die das Produkt V4000 Press Brake Sensor System beschreibt.

Das Sensorsystem V4000 der Firma Sick beinhaltet eine Lichtquelle und eine Kameraeinheit, die dazu ausgebildet sind, seitlich rechts bzw. links an einem Presswerkzeug angeordnet zu werden, so dass sie in der Arbeitsbewegung des Presswerkzeuges mitgeführt werden. Die Lichtquelle erzeugt einen Lichtstrahl, der parallel zu der vorlaufenden Kante des Presswerkzeugs verläuft. Die Kameraeinheit empfängt den Lichtstrahl und kann auf diese Weise den Raumbereich unmittelbar vor der vorlaufenden Kante des Presswerkzeugs überwachen. Ein Eingriff in den überwachten Raumbereich während der Arbeitsbewegung des Presswerkzeugs wird detektiert und führt typischerweise zum Anhalten der Arbeitsbewegung. Details zum mechanischen Aufbau der Kameraeinheit sind in der Bedienungsanleitung nicht offenbart.

Die eingangs genannte DE 36 22 843 A1 beschreibt einen mechanischen Aufbau für eine Bildaufnahmevorrichtung auf Halbleiterbasis, die zusammen mit einem Endoskop verwendet wird. Hierzu wird auf ein Okular eines Endoskops die Bildaufnahmeeinheit aufgeschraubt. Diese ist in einem Gehäuse integriert. Ein Bildsensor ist auf einer Halteplatte angebracht, die innerhalb eines topfförmigen Trägerelements befestigt ist. Hierbei erfolgt die Befestigung derart, dass die Trägerplatte relativ zum topfförmigen Trägerelement in zwei Bewegungsrichtungen verschoben werden kann. Zudem kann ein Abstand des Bildsensors zu dem Okular durch Verdrehen eines Kupplungselements verändert werden. Gleichzeitig bietet sich die Möglichkeit über Stellschrauben eine Verkippung des Bildsensors zusammen mit der Halteplatte und dem topfförmigen Trägerelement herbeizuführen. Nachteilig an der bekannten Bildaufnahmevorrichtung ist jedoch, dass die Integration der Bauteile dazu führt, dass eine Justage nur mit großem Aufwand möglich ist. Um beispielsweise die Halteplatte zu verschieben, müssen zwei Halteschrauben von außen geöffnet werden, die nur schwer zugänglich sind. Zudem ist das topfförmige Trägerelement derart ausgebildet, dass es von dem Koppelstück über schräge Passflächen gehalten wird, so dass eine Kippung möglich ist. Derartige Justagemöglichkeiten sind für die Anwendung einer Bildaufnahmevorrichtung in einem mitlaufenden Maschinenteil ungeeignet, da diese aufgrund der Vibrationen und ständigen Bewegung schnell ihre Ausrichtung verlieren können.

EP 1 291 573 A beschreibt ein Sicherungsverfahren sowie einen optoelektronischen Sensor für das Sicherungsverfahren. Es wird ein Verfahren beschrieben, das einen Sensor zur Sicherung eines Gefahrenbereichs eines bewegten, eine Angriffsstelle aufweisenden Werkzeugs einsetzt. Hierbei wird ein Überwachungsbereich mit einer Begrenzungsfläche überwacht, deren Querschnitt sich entlang eines Kreisbogens oder darüber hinaus erstreckt. Dabei ist der Mittelpunkt des Kreisbogens von der Angriffsfläche des Werkzeugs in Bewegungsrichtung des Werkzeugs beabstandet angeordnet. Zudem weist der Kreisbogen eines Radius auf, der wenigstens so groß ist, dass die Begrenzungsfläche des Überwachungsbereichs - zumindest bedienerseitig - sich bis zu der Angriffsstelle des Werkzeugs oder radial darüber hinaus erstreckt.

Die EP 0 597 934 B1 beschreibt einen mechanischen Aufbau für eine elektronische Kamera, die eine Vielzahl von unterschiedlichen Anwendungsmöglichkeiten bietet soll, da Bauteilträger für elektronische Baugruppen wahlweise ergänzt werden können. Die bekannte Kamera besitzt ein Objektiv mit einem Objektivkörper, der in eine passende Gewindebohrung an einer Frontplatte des Kameragehäuses eingeschraubt werden kann. Die Frontplatte wird ihrerseits mit einem Gehäusekörper verschraubt, in dem verschiedene Bauteilträger untergebracht sind. Die Kamera besitzt einen Bildsensor, der auf eine Halteplatte aufgesteckt wird, welche in dem Kameragehäuse untergebracht wird. Die Halteplatte ist über Steckverbindungen mit einem Bauteilträger verbunden, der weitere Elektrönikkomponenten aufnimmt. Die bekannte Kamera ermöglicht eine relativ einfache Montage durch Zusammenstecken und Verschrauben der einzelnen Kamerakomponenten. Nachteilig an dem bekannten Kamerasystem ist allerdings, dass der Bildsensor und das Objektiv nicht individuell zueinander ausgerichtet bzw. justiert werden können. Die Ausrichtung des Objektivs und des Bildsensors zueinander ist durch die Abmessungen und die Fertigungstoleranzen der einzelnen Bauelemente fest vorgegeben.

Ein mechanisch derartig festgelegter Aufbau mag für viele Anwendungsfälle ausreichend oder sogar wünschenswert sein. Für eine Kameraeinheit, die als Teil einer sicherheitsgerichteten Steuerung zum Absichern einer automatisiert arbeitenden Maschine oder Anlage dienen soll, ist es jedoch wünschenswert, den Bildsensor und das Objektiv bzw. die Abbildungsoptik individuell zueinander auszurichten, um beispielsweise einzelne Pixel oder Pixelbereiche des Bildsensors gezielt auswerten zu können.

Andererseits muss der mechanische Aufbau einer Kameraeinheit, die als Teil einer mitlaufenden Schutzeinrichtung verwendet werden soll, sehr robust sein und insbesondere starken Erschütterungen und Vibrationen standhalten. Die Justierung von Bildsensor und Objektiv darf trotz der zum Teil starken Erschütterungen und Vibrationen nicht verloren gehen.

Darüber hinaus ist es wünschenswert, wenn die Kameraeinheit möglichst einfach und schnell montiert und justiert werden kann, um die Herstellungskosten gering zu halten.

Vor diesem Hintergrund ist es eine Aufgabe der vorliegenden Erfindung, eine Kameraeinheit zum Überwachen eines Raumbereichs anzugeben, die sich insbesondere als bildgebender Sensor zur Absicherung von gefährlichen Maschinen oder Anlagen eignet. Die neue Kameraeinheit soll eine individuelle Ausrichtung des Bildsensors relativ zu der Abbildungsoptik ermöglichen und einen einfachen und robusten mechanischen Aufbau besitzen.

Gemäß einem Aspekt der Erfindung wird eine Kameraeinheit der eingangs genannten Art vorgeschlagen, bei der die Kameraeinheit ein zweites Koppelstück besitzt, das mit dem Bauteilträger fest verbunden ist und das relativ zu dem ersten Koppelstück beweglich ist, um die zweite Beweglichkeit zu ermöglichen.

Bei der neuen Kameraeinheit bildet das erste Koppelstück ein zentrales Element der integrierten Baueinheit, weil es einerseits mit dem Objektivkörper und andererseits mit dem Bauteilträger zusammenwirkt, auf dem der Bildsensor angeordnet ist. Das erste Koppelstück besitzt zwei voneinander unabhängige Beweglichkeiten, nämlich einerseits relativ zu dem Objektivkörper und andererseits relativ zu dem Bauteilträger. Aufgrund der zumindest zwei lösbaren Spannmechanismen lassen sich diese beiden Beweglichkeiten unabhängig voneinander freigeben oder blockieren. Dies ermöglicht eine sehr genaue Justierung des Bildsensors relativ zu dem Objektiv in verschiedenen Bewegungsrichtungen. Es versteht sich, dass die zumindest zwei Spannmechanismen nach Abschluss der Montage und Justierung so fest gespannt sind, dass die relative Beweglichkeit von Objektivkörper, erstem Koppelstück und Bauteilträger auf Null reduziert ist. Mit anderen Worten sorgen die zumindest zwei lösbaren Spannmechanismen dafür, dass die drei Elemente nach Abschluss der Montage und Justierung starr und ohne relative Bewegung zueinander gekoppelt sind. Durch Lösen des ersten oder zweiten Spannmechanismus ist es jedoch möglich, den Bildsensor und den Objektivkörper relativ zueinander zu verschieben, so dass der Bildsensor relativ zu dem Objektiv individuell ausgerichtet werden kann. Die Beweglichkeit bei gelösten Spannmechanismen ist allerdings begrenzt, d.h. der Objektivkörper, das erste Koppelstück und der Bauteilträger sind auch bei gelösten Spannmechanismen noch zu einer integrierten Baueinheit verbunden, was eine einfache Handhabung und Justierung ermöglicht.

Die Trennung der Beweglichkeiten in zumindest zwei "Teilbeweglichkeiten" vereinfacht nicht nur die individuelle Justierung von Bildsensor und Objektiv. Sie ermöglicht darüber hinaus eine besonders stabile und erschütterungsfeste Fixierung der zueinander beweglichen Bauelemente. Aufgrund dieser Eigenschaften eignet sich die neue Kameraeinheit besonders gut für die Verwendung als bildgebender Sensor in einer Schutzvorrichtung zum Absichern einer automatisiert arbeitenden Maschine und insbesondere zur Verwendung als bildgebender Sensor in einer mitlaufenden Schutzeinrichtung an einem bewegten Maschinenteil einer Presse, Stanze oder dergleichen.

Die Verwendung des zweiten Koppelstücks ermöglicht einen sehr robusten mechanischen Aufbau und eine stabile Fixierung des ersten Koppelstücks und des Bauteilträgers mit Hilfe des zweiten Spannmechanismus.

In einer bevorzugten Ausgestaltung sind die erste und die zweite Beweglichkeit orthogonal zueinander. Besonders bevorzugt ist es, wenn eine der Beweglichkeiten eine Bewegungsebene aufspannt und die andere Beweglichkeit eine Bewegung senkrecht zu dieser Bewegungsebene ermöglicht.

In dieser Ausgestaltung lassen sich der Bildsensor und das Objektiv sehr einfach und genau zueinander ausrichten. Außerdem bietet diese Ausgestaltung mehrere Freiheitsgrade beim Justieren und infolge dessen eine große Flexibilität.

In einer weiteren Ausgestaltung definiert der Bildsensor eine Sensorebene und die erste Beweglichkeit definiert eine Bewegungsebene, die parallel zu der Sensorebene liegt.

In dieser Ausgestaltung ermöglicht die erste Beweglichkeit eine Ausrichtung des Objektivs in einer Ebene, die parallel zu der Oberfläche des Bildsensors liegt. Das Objektiv kann also in Bezug auf den Bildsensor seitlich verschoben werden. Damit ist es möglich, die von der Abbildungsoptik beleuchtete Fläche des Bildsensor exakt festzulegen. Es ist insbesondere möglich, einen definierten Pixelbereich auf der Oberfläche des Bildsensors optimal in das Zentrum der Abbildungsoptik zu verschieben oder auch aus der Fläche, die von der Abbildungsoptik beleuchtet wird, herauszunehmen. In bevorzugten Ausgestaltungen kann das Objektiv auch um eine Achse senkrecht zu der Sensorebene gedreht werden. Damit ist es möglich, die Pixelmatrix des Bildsensors so auszurichten, dass die Pixelzeilen und Pixelspalten des Bildsensor parallel zu einer vorgegebenen Objektkontur verlaufen. Diese Justiermöglichkeit ist besonders für die Verwendung der neuen Kameraeinheit als bildgebender Sensor in einer Schutzvorrichtung zum Absichern einer gefährlichen Maschine oder Anlage von Vorteil.

In einer weiteren Ausgestaltung ermöglicht die erste Beweglichkeit eine Translations- und eine Rotationsbewegung des ersten Koppelstücks relativ zu dem Objektivkörper.

In dieser Ausgestaltung lässt sich der Objektivkörper relativ zu dem ersten Koppelstück verschieben und verdrehen. Letzteres ist von Vorteil, um die Pixelzeilen und -spalten des Bildsensors zu einer definierten Objektkontur auszurichten. Des Weiteren kann diese Beweglichkeit genutzt werden, um einen seitlichen Kabelabgang am Bauteilträger in einer bestimmten Richtung zu positionieren. Beide Verstellmöglichkeiten sind besonders vorteilhaft, wenn der Bildsensor seinerseits relativ zu dem Koppelstück verdreht werden kann, was in weiteren bevorzugten Ausgestaltungen der Erfindung der Fall ist, um den Bildsensor exakt in der Brennebene des Objektivs zu positionieren. Eine Rotationsbewegung zwischen Objektivkörper und erstem Koppelstück bietet für diesen Fall die Möglichkeit, eine unerwünschte Drehlage des Bildsensors auszugleichen.

In einer weiteren Ausgestaltung definiert der Bildsensor eine Sensorebene und die zweite Beweglichkeit definiert eine Bewegungsrichtung, die senkrecht zu der Sensorebene verläuft.

In dieser Ausgestaltung ermöglicht die zweite Beweglichkeit eine Veränderung des senkrechten Abstandes zwischen dem Bildsensor und dem Objektivkörper. Damit kann der Bildsensor optimal im Brennpunkt bzw. der Brennebene des Objektivs positioniert werden. Es ist von Vorteil, wenn diese Beweglichkeit von der Beweglichkeit parallel zu der Sensorebene entkoppelt ist, weil dann die Fokussierung unabhängig von der Querausrichtung des Sensors durchgeführt werden kann.

In einer weiteren Ausgestaltung ermöglicht die zweite Beweglichkeit eine kombinierte Translations- und Rotationsbewegung des ersten Koppelstücks relativ zu dem Bauteilträger.

In dieser Ausgestaltung sind die Translationsbewegung und die Rotationsbewegung so miteinander kombiniert, dass sie nur gemeinsam ausgeführt werden können und eine Bewegung die anderen bedingt. Mit anderen Worten führt eine Rotationsbewegung hier zu einer Verschiebung in der Translationsrichtung. Diese Ausgestaltung besitzt den Vorteil, dass die Verschiebung in der Translationsrichtung sehr feinfühlig und genau eingestellt werden kann.

In einer weiteren Ausgestaltung sind das erste und das zweite Koppelstück miteinander verschraubt, wobei eines der Koppelstücke ein Außengewinde und das andere Koppelstück ein Innengewinde aufweist, die ineinander greifen. Vorzugsweise besitzt das erste Koppelstück ein Innengewinde und das zweite Koppelstück besitzt ein Außengewinde, so dass das erste Koppelstück nach Art einer Überwurfmutter mit dem zweiten Koppelstück verschraubt ist.

Diese Ausgestaltung ermöglicht einen äußerst robusten und stoßfesten Aufbau der neuen Kameraeinheit. Zusätzlich kann die relative Verschiebung des Bildsensor zu dem Objektiv sehr exakt und feinfühlig eingestellt werden, indem man vorteilhafterweise eine flache Gewindesteigung wählt. Diese Ausgestaltung ist daher besonders bevorzugt, um eine Kameraeinheit für den eingangs beschriebenen Verwendungszweck zu realisieren.

In einer weiteren Ausgestaltung weist der zweite Spannmechanismus eine Kontermutter auf, die dazu ausgebildet ist, das erste und das zweite Koppelstück lösbar aneinander zu fixieren.

Die Verwendung einer Kontermutter ermöglicht eine sehr einfache und trotzdem robuste Fixierung, wenn die beiden Koppelstücke in der zuvor beschriebenen Weise miteinander verbunden sind. Außerdem ermöglicht diese Realisierung einen sehr kompakten Aufbau, so dass die Baugröße der neuen Kameraeinheit reduziert werden kann, ohne die Montage und Justierung zu erschweren.

In einer weiteren Ausgestaltung besitzt die neue Kameraeinheit ein Federelement, das dazu ausgebildet ist, an einem der Koppelstücke anzugreifen, um das eine Koppelstück bei gelöster Kontermutter relativ zu dem anderen Koppelstück zu fixieren. In bevorzugten Ausgestaltungen ist das Federelement ein elastischer Ring, der zwischen der Kontermutter und dem ersten Koppelstück angeordnet ist. Dabei ist es bevorzugt, wenn dieser Ring das zweite Koppelstück konzentrisch umgibt.

Diese Ausgestaltung ermöglicht eine besonders kompakte und kleinbauende Realisierung, weil dasjenige Koppelstück, an dem das Federelement angreift, durch das Federelement in einer Ruhelage gehalten wird. Daher kann das andere Koppelstück in der Schraubverbindung gedreht werden, um eine Verschiebung des Bildsensors relativ zu dem Objektivkörper zu erzielen, ohne dass man von außen auf das federbelastete Koppelstück zugreifen muss. Das federbelastete Koppelstück kann "verborgen" innerhalb der integrierten Baueinheit angeordnet sein. Die Verwendung eines elastischen Ringes, insbesondere eines O-Ringes, zwischen Kontermutter und Koppelstück ist eine besonders kostengünstige, einfache und robuste Realisierung.

In einer weiteren Ausgestaltung weist das zweite Koppelstück zumindest einen konischen Passzapfen auf, der in eine Öffnung an dem Bauteilträger eingreift. Vorzugsweise ist das zweite Koppelstück mit Hilfe von drei konischen Passzapfen an dem Bauteilträger befestigt. Des weiteren ist es bevorzugt, wenn der Passzapfen eine in Bohrung an dem Bauteilträger eingreift, deren Innendurchmesser geringfügig kleiner ist als der Außendurchmesser des Passzapfens im Bereich der Bohrung. Auf diese Weise wird eine Presspassung realisiert und der Bauteilträger (mit dem Bildsensor) wird in einer exakt definierten Lage an dem zweiten Koppelstück gehalten.

Diese Ausgestaltungen ermöglichen eine einfache und kostengünstige Montage in Verbindung mit einer hohen Positioniergenauigkeit des Bildsensors relativ zu dem Objektiv. Außerdem ergibt diese Ausgestaltung einen sehr robusten und erschütterungsfesten Aufbau.

In einer weiteren Ausgestaltung weist das erste Koppelstück einen vorspringenden Flanschbereich auf und der erste Spannmechanismus weist zumindest ein erstes und ein zweites Klemmelement auf, die dazu ausgebildet sind, den vorspringenden Flanschbereich lösbar einzuklemmen. Besonders bevorzugt ist es, wenn das erste Koppelstück einen umlaufenden Flanschbereich aufweist und wenn das erste und das zweite Klemmelement ring- oder scheibenförmig ausgebildet sind, um den umlaufenden Flanschbereich mit einer großen Anlagefläche zu fixieren.

Diese Ausgestaltung ermöglicht eine sehr robuste und stoßfeste Realisierung, die einfach und kostengünstig montiert werden kann. Außerdem ermöglicht diese

Ausgestaltung eine erste Beweglichkeit mit mehreren Freiheitsgraden und damit eine große Flexibilität beim Justieren des Bildsensor relativ zu dem Objektiv.

In einer weiteren Ausgestaltung ist der Bildsensor ohne Sensorgehäuse direkt auf dem Bauteilträger angeordnet. Vorzugsweise ist der Bildsensor ein Halbleiterchip, der direkt auf den Bauteilträger gebondet ist.

Diese Ausgestaltung ermöglicht eine besonders hohe Genauigkeit beim Ausrichten des Bildsensors relativ zu dem Objektiv, weil Montagetoleranzen eliminiert werden, die sich zwangsläufig ergeben, wenn ein Halbleiterchip in einem eigenen Chipgehäuse untergebracht ist, wie etwa einem PGA oder SPGA-Gehäuse.

In einer weiteren Ausgestaltung umhäusen der Bauteilträger, das zumindest eine Koppelstück und der Objektivkörper den Bildsensor weitgehend staubdicht.

Diese Ausgestaltung ist besonders vorteilhaft, wenn der Bildsensor ohne Sensorgehäuse direkt auf den Bauteilträger gebondet ist, weil der Bildsensor auf diese Weise vor Verschmutzungen und mechanischen Beschädigungen geschützt ist. Auch bei einem handelsüblichen Bildsensor, bei dem der Halbleiterchip in einem Chipgehäuse untergebracht ist, besitzt diese Ausgestaltung Vorteile, da auf kostengünstige Weise ein zusätzlicher Schutz ermöglicht ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine vereinfachte Darstellung einer Biegepresse mit einer Schutzvorrichtung, die eine Kameraeinheit nach einem bevorzugten Ausführungsbeispiel der Erfindung beinhaltet,
- Figur 2: eine explosionsartige Darstellung eines bevorzugten Ausführungsbeispiels der neuen Kameraeinheit, und
- Figur 3: das Ausführungsbeispiel aus Figur 2 in einem seitlichen Querschnitt.

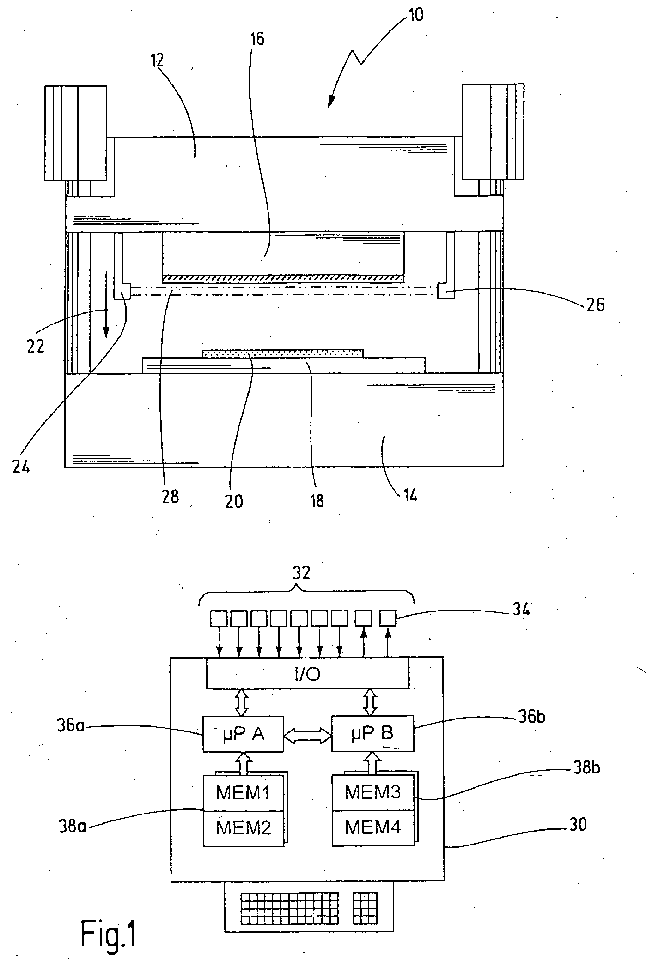

In Figur 1 ist eine Biegepresse mit einer Schutzvorrichtung, in der eine Kameraeinheit nach einem bevorzugten Ausführungsbeispiel der Erfindung als bildgebender Sensor verwendet wird, in der Gesamtheit mit der Bezugsziffer 10 bezeichnet. Die Biegepresse besitzt ein erstes Maschinenteil 12 und ein zweites Maschinenteil 14, die in der Lage sind, eine Arbeitsbewegung relativ zueinander auszuführen. Typischerweise ist das untere Maschinenteil 14 feststehend, während das obere Maschinenteil 12 vertikal beweglich ist. Grundsätzlich könnte jedoch auch das untere Maschinenteil 14 beweglich sein.

Des Weiteren ist die vorliegende Erfindung nicht auf Kameraeinheiten zum Absichern von Biegepressen beschränkt. Wenngleich es sich um ein bevorzugtes Anwendungsgebiet handelt, kann die neue Kameraeinheit auch als bildgebender Sensor für andere Anwendungen eingesetzt werden, bei denen der gefährliche Arbeitsbereich einer automatisiert arbeitenden Maschine oder Anlage mit Hilfe eines bildgebenden Sensors abgesichert werden soll. Darüber hinaus kann die neue Kameraeinheit prinzipiell auch für andere Zwecke eingesetzt werden, beispielsweise zur Überwachung eines Raumbereichs im Rahmen einer Zugangskontrolle, oder als bildgebender Sensor in automatisierten Anlagen und Prozessen zur Qualitätssicherung.

Im vorliegenden Ausführungsbeispiel besitzt die Biegepresse 10 ein Presswerkzeug 16 (Patrize), das am oberen Maschinenteil 12 befestigt ist. Am unteren Maschinenteil 14 ist eine Matrize 18 angeordnet, auf der ein Werkstück 20 liegt. Das Presswerkzeug 16 kann in Richtung des Pfeils 22 nach unten bewegt werden und in die Matrize 18 eintauchen, um das Werkstück 20 zu verformen.

Mit der Bezugsziffer 24 ist eine Lichtquelle bezeichnet. Mit der Bezugsziffer 26 ist eine Kameraeinheit gemäß einem bevorzugten Ausführungsbeispiel der Erfindung bezeichnet. Die Lichtquelle 24 und die Kameraeinheit 26 sind seitlich von dem Presswerkzeug 16 am oberen Maschinenteil 12 befestigt, so dass sie der Arbeitsbewegung des oberen Maschinenteils 12 folgen. Die Lichtquelle 24 erzeugt einen Lichtstrahl 26, der parallel zu der vorlaufenden Kante des Presswerkzeuges 16 verläuft und die Kameraeinheit 26 so beleuchtet, dass ein in der Kameraeinheit 26 angeordneter Bildsensor den Lichtstrahl 28 empfangen kann, sofern er nicht durch ein in den Arbeitsbereich des Presswerkzeuges 16 hineinragendes Hindernis unterbrochen bzw. verdeckt wird. Die Lichtquelle 24 und die Kameraeinheit 26 bilden somit einen optischen Sensor, der denjenigen Raumbereich überwacht, der der vorderen Kante des Presswerkzeuges 16 vorgelagert ist.

Mit der Bezugsziffer 30 ist eine Steuereinheit bezeichnet, die eine Vielzahl von Anschlüssen 32 besitzt. Die Steuereinheit 30 ist über die Anschlüsse 32 mit Sensoren und Aktoren der Biegepresse 10 verbunden. Insbesondere ist die Steuereinheit 30 in der Lage, über einen oder mehrere Ausgangsanschlüsse 34 ein Stoppsignal auszugeben, mit dessen Hilfe die Arbeitsbewegung 22 der Biegepresse 10 gestoppt wird. Die Steuereinheit 30 erzeugt dieses Stoppsignal u.a. dann, wenn sie von der Kameraeinheit 26 ein Steuersignal erhält, das einen Eingriff in den überwachten Raumbereich signalisiert.

Die Steuereinheit 30 kann auch den Betriebsablauf der Biegepresse 10 steuern. Alternativ hierzu kann die Steuereinheit 30 eine separate Sicherheitssteuerung sein, die lediglich für die Überwachung der Sicherungsfunktionen und insbesondere für das rechtzeitige Abschalten der Arbeitsbewegung bei Auftreten einer Gefahrensituation verantwortlich ist. Im letztgenannten Fall ist es von Vorteil, wenn die Steuereinheit 30 ganz oder teilweise in der Kameraeinheit 26 integriert ist. Wie in Figur 1 dargestellt ist, kann die Steuereinheit 30 jedoch auch separat von der Kameraeinheit 26 angeordnet sein.

Die Steuereinheit 30 besitzt hier einen ersten und einen zweiten Prozessor 36a, 36b sowie einen ersten und einen zweiten Speicher 38a, 38b. Die Prozessoren 36a , 36b und Speicher 38a, 38b symbolisieren redundante Signalverarbeitungskanäle innerhalb der Steuereinheit 30, was eine bekannte Realisierung für Sicherheitssteuerungen zum Steuern von Sicherheitsfunktionen ist. Vorteilhafterweise wird dieser mehrkanalig-redundante Aufbau auch beibehalten, wenn die Steuereinheit 30 ganz oder teilweise in der Kameraeinheit 26 integriert ist. In bevorzugten Ausführungsbeispielen ist die Kameraeinheit 26 insoweit fehlersicher realisiert, dass sie zumindest die Anforderungen nach Kategorie 3 der europäischen Norm EN 954-1 oder vergleichbare Sicherheitsanforderungen, wie etwa nach IEC61508, erfüllt.

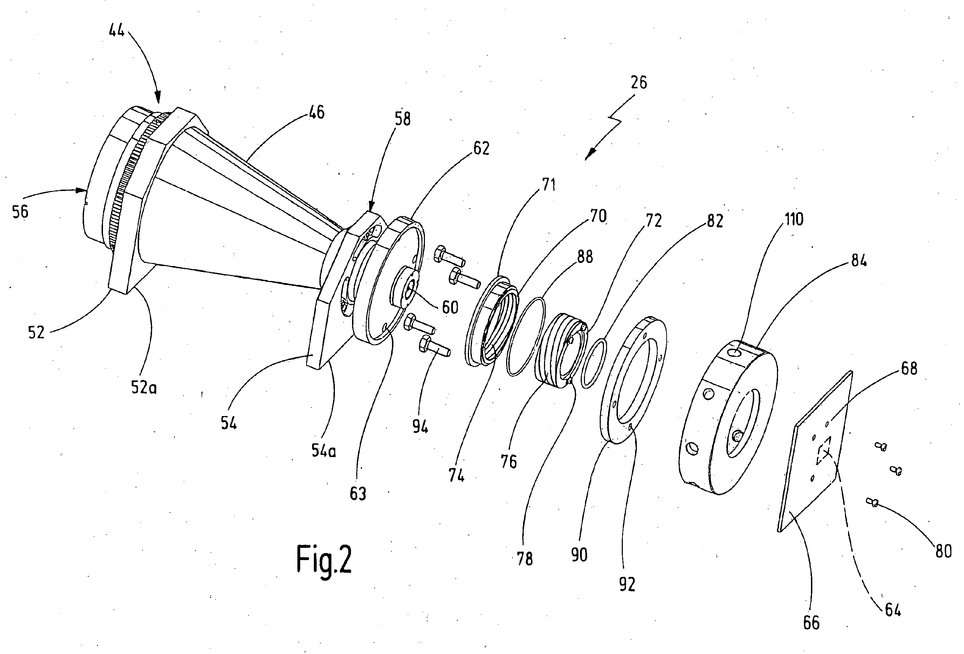

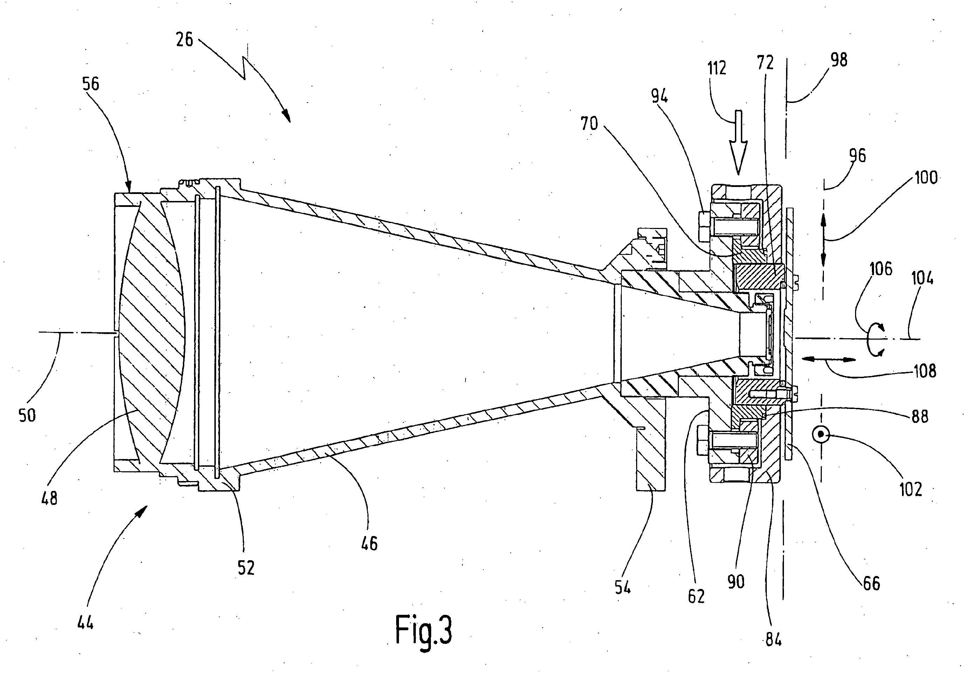

Im Folgenden wird ein bevorzugter mechanischer Aufbau für die Kameraeinheit 26 anhand der Figuren 2 und 3 beschrieben. Gleiche Bezugszeichen bezeichnen dabei jeweils gleiche Elemente.

Die Kameraeinheit 26 besitzt ein Objektiv 44 mit einem Objektivkörper 46, in dem hier ein Linsenelement 48 angeordnet ist. Prinzipiell kann das Objektiv 44 auch mehrere Linsenelemente (hier nicht dargestellt) aufweisen. Darüber hinaus kann das Objektiv 44 grundsätzlich auch andere optische Elemente, wie etwa Spiegel oder Linsen-Spiegel-Kombinationen, enthalten. Die optische Achse des Objektivs 44 ist in Figur 3 bei der Bezugsziffer 50 angedeutet.

Mit den Bezugsziffern 52 und 54 sind zwei Montageflansche bezeichnet, wobei der Montageflansch 52 am vorderen (distalen) Ende 56 des Objektivkörpers sitzt, während der Montageflansch 54 am hinteren (proximalen) Ende 58 des Objektivkörpers angeordnet ist. Die beiden Montageflansche 52, 54 besitzen jeweils eine ebene Montagefläche 52a bzw. 54a, an der die Kameraeinheit 26 in einem Kameragehäuse (hier nicht dargestellt) und/oder an einem Halter befestigt werden kann.

Der Objektivkörper 46 ist hier konisch ausgebildet. Sein lichter Innendurchmesser verjüngt sich vom distalen Ende 56 zum proximalen Ende 58 hin. Am proximalen Ende 58 ist eine Bildaustrittsöffnung 60 angeordnet.

Des Weiteren ist am proximalen Ende 58 ein kreisförmiger Montageflansch 62 angeordnet, der mit dem Objektivkörper 46 fest verbunden ist. Der Montageflansch 62 besitzt mehrere Bohrungen 63, mit deren Hilfe der Objektivkörper 46 in der nachfolgend beschriebenen Weise mit einem Bildsensor 64 zu einer integrierten und insoweit "einstückigen" Kameraeinheit verbunden ist.

Der Bildsensor 64 ist auf einem Bauteilträger 66 angeordnet. Vorzugsweise befinden sich auf dem Bauteilträger 66 noch weitere elektronische Bauteile (hier nicht dargestellt), die zum Ansteuern und Auslesen des Bildsensors 64 dienen. Des Weiteren könnten die Prozessoren 36a, 36b und die Speicher 38a, 38b der Steuerung 30 ganz oder teilweise auf dem Bauteilträger 66 angeordnet sein. Alternativ hierzu könnten diese Bauelemente auf einem weiteren Bauteilträger (hier nicht dargestellt) angeordnet sein, der über Steckverbindungen mit dem Bauteilträger 66 verbunden ist.

In dem bevorzugten Ausführungsbeispiel ist der Bildsensor 64 ohne Sensor- bzw. Chipgehäuse direkt auf den Bauteilträger 66 gebondet. Der Bauteilträger 66 besitzt drei Bohrungen 68, die so angeordnet sind, dass sie eine dreieckige Fläche aufspannen, innerhalb der der Bildsensor 64 angeordnet ist. Die Bohrungen 68 dienen dazu, den Bauteilträger 66 mit den nachfolgend beschriebenen Elementen zu verbinden.

Mit der Bezugsziffer 70 ist ein erstes Koppelstück bezeichnet, das ringförmig ausgebildet ist und einen ringförmig umlaufenden, radial vorstehenden Flanschbereich 71 aufweist. Bezugsziffer 72 bezeichnet ein zweites Koppelstück in Form einer ringförmigen Hülse. Das erste Koppelstück 70 besitzt ein Innengewinde 74. Das zweite Koppelstück 72 besitzt ein Außengewinde 76. Das Innengewinde 74 und das Außengewinde 76 sind so ausgebildet, dass das Koppelstück 70 nach Art einer Überwurfmutter auf das zweite Koppelstück 72 aufgeschraubt werden kann (siehe Figur 3). Prinzipiell wäre jedoch auch eine umgekehrte Anordnung möglich, bei der das zweite Koppelstück 72 nach Art einer Überwurfmutter auf das erste Koppelstück 70 aufgeschraubt ist.

Das zweite Koppelstück 72 besitzt an seiner Stirnfläche, die dem Bauteilträger 66 zugewandt ist, drei konische Passzapfen 78, die dazu ausgebildet sind, in die Bohrungen 68 am Bauteilträger 66 einzugreifen (siehe Figur 3). Im dargestellten Ausführungsbeispiel sind die Passzapfen einstückig an dem zweiten Koppelstück 72 ausgebildet. Jeder Passzapfen 78 besitzt eine axiale Gewindebohrung, in die eine der Schrauben 80 eingeschraubt werden kann. Wie in Figur 3 dargestellt ist, wird das zweite Koppelstück 72 mit Hilfe der Passzapfen 78 fest mit dem Bauteilträger 66 verbunden. Die konischen Pässzapfen sind hier so dimensioniert, dass sie auf Höhe der Bohrungen 68 ein geringes Übermaß im Vergleich zu dem lichten Innendurchmesser der Bohrungen 68 aufweisen. Auf diese Weise wird eine Presspassung realisiert, die dafür sorgt, dass das zweite Koppelstück 72 sehr exakt und sehr stabil zu dem Bauteilträger 66 ausgerichtet ist. Infolge der präzisen Schraubverbindung zwischen erstem und zweitem Koppelstück ist dann auch das erste Koppelstück 70 mit hoher Genauigkeit zu dem Bauteilträger 66 und dem darauf befindlichen Bildsensor 64 ausgerichtet.

Mit der Bezugsziffer 82 ist ein O-Ring bezeichnet, der zwischen dem zweiten Koppelstück 72 und dem Bauteilträger 66 angeordnet ist. Der O-Ring 82 sorgt für eine staubdichte Verbindung zwischen dem zweiten Koppelstück 72- und dem Bauteilträger 66.

Mit der Bezugsziffer 84 ist eine Kontermutter bezeichnet, die zwischen dem ersten Koppelstück 70 und dem Bauteilträger 66 auf das Außengewinde 76 des zweiten Koppelstücks 72 aufgeschraubt ist. Zwischen dem ersten Koppelstück 70 und der Kontermutter 84 befindet sich noch ein zweiter O-Ring 88. Der O-Ring 88 fungiert als Federelement, welches das erste Koppelstück 70 bei gelöster Kontermutter 84 in Richtung des Montageflansches 62 drückt. Infolgedessen lässt sich das zweite Koppelstück 72 bei leicht gelöster Kontermutter relativ zu dem ersten Koppelstück 70 verdrehen, obwohl das erste Koppelstück 70 in dem integrierten Bauteilträger verborgen ist und dementsprechend von außen nicht zugänglich ist.

Mit der Bezugsziffer 90 ist ein Klemmring bezeichnet, der konzentrisch zu dem ersten Koppelstück 70 angeordnet ist. Der Klemmring 90 besitzt an seinen Stirnflächen mehrere Bohrungen 92, die mit den Bohrungen 63 am Montageflansch 62 fluchten. Der Klemmring 90 ist mit Hilfe von Schrauben 94, die in diese Bohrungen 92 eingreifen, lösbar an dem Montageflansch 62 verschraubt, wobei der umlaufende Flanschbereich 71 des ersten Koppelstücks 70 zwischen den einander gegenüberliegenden Stirnflächen des Montageflansches 62 und des Klemmrings 90 festgeklemmt ist. Der Montageflansch 62, der Klemmring 90 und die Schrauben 94 bilden somit einen ersten Spannmechanismus, mit dessen Hilfe das erste Koppelstück 70 relativ zu dem Objektivkörper 46 fixiert werden kann.

Die Abmessungen des ersten Koppelstücks 70 und des Klemmrings 90 sind allerdings so gewählt, dass das erste Koppelstück 70 bei gelösten Schrauben 94 eine begrenzte Beweglichkeit innerhalb der integrierten Baueinheit aufweist. Insbesondere kann das erste Koppelstück 70 bei gelösten Schrauben 94 entlang einer Bewegungsebene 96 verschoben werden, die parallel zu einer Sensorebene 98 liegt, welche von der Oberfläche des Bildsensors 64 aufgespannt wird. So ist bei gelösten Schrauben 94 eine Verschiebung des ersten Koppelstücks 70 in Vertikalrichtung 100 und in Horizontalrichtung 102 möglich. Außerdem kann das erste Koppelstück 70 bei gelösten Schrauben 94 um eine Achse 104 gedreht werden, die im bevorzugten Ausführungsbeispiel mit der optischen Achse 50 des Objektivs 54 zusammenfällt. Diese Rotationsbewegung ist in Figur 3 mit dem Doppelpfeil 106 dargestellt. Sie ist weitgehend unabhängig von den Translationsbewegungen 100, 102.

Da das erste Koppelstück 70 bei festgezogener Kontermutter 84 starr mit dem zweiten Koppelstück 72 und infolgedessen mit dem Bauteilträger 66 verbunden ist, ermöglicht diese Anordnung eine Verschiebung des Bildsensors 64 relativ zu dem Objektivkörper 46 entlang der drei Bewegungsrichtungen 100, 102, 106. Zusätzlich ist bei gelösten Schrauben 94 ein begrenztes Spiel in Axialrichtung, also senkrecht zur Bewegungsebene 96 vorhanden. Dieses Spiel wird jedoch eliminiert, sobald die Schrauben 94 wieder angezogen werden.

Andererseits kann der Bauteilträger 66 mit dem Bildsensor 64 in einer Bewegungsrichtung 108 senkrecht zu der Sensorebene 98 verschoben werden, indem man die Kontermutter 84 löst und anschließend das zweite Koppelstück 72 um die Achse 104 dreht. Aufgrund der Gewindeverzahnung zwischen erstem und zweitem Koppelstück führt diese Rotationsbewegung zu einer Translationsbewegung in Richtung des Doppelpfeils 108. Ein erneutes Kontern mit Hilfe der Kontermutter 84 fixiert die beiden Koppelstücke 70, 72 wieder relativ zueinander, so dass der dann eingestellte senkrechte Abstand zwischen Bildsensor 64 und Bildaustrittsöffnung 60 erhalten bleibt.

In dem dargestellten Ausführungsbeispiel ist die Kontermutter 84 topfförmig ausgebildet, d.h. sie besitzt ein U-förmiges Querschnittsprofil (siehe Figur 3) mit einer Mantelfläche, in der radiale Bohrungen 110 angeordnet sind (Figur 2). Die radialen Bohrungen 110 ermöglichen einerseits ein kraftvolles Festziehen und Lösen der Kontermutter 84 mit Hilfe eines entsprechend angepassten Hakenschlüssels (nicht dargestellt). Darüber hinaus lassen sich die Bohrungen 110 vorteilhaft verwenden, um eine fein dosierte Verschiebung der verbundenen Elemente "erstes Koppelstück 70, zweites Koppelstück 72, Bauteilträger 66 und Bildsensor 64" innerhalb der Bewegungsebene 96 zu ermöglichen, wenn die Schrauben 94 gelöst sind und das erste Koppelstück 70 dementsprechend eine erste Beweglichkeit innerhalb der integrierten Baueinheit hat. Zu diesem Zweck lassen sich Federstifte und/oder Stellschrauben in die Radialbohrungen 110 einführen, was in Figur 3 mit dem Blockpfeil 112 dargestellt ist.

In dem bevorzugten Ausführungsbeispiel bilden der Bauteilträger 66, das zweite Koppelstück 72 (zusammen mit dem O-Ring 82), das erste Koppelstück 70 und der Montageflansch 62 eine weitgehend staubdichte Umhäusung für den "nackten" Bildsensor 64. Durch die labyrinthartige Verzahnung infolge der übereinandergreifenden Flansche bleibt die staubdichte Umhäusung auch erhalten, wenn die Schrauben 94 gelöst sind, um das erste Koppelstück 70 relativ zu dem Objektivkörper 46 zu bewegen.

Insgesamt ermöglicht die Kameraeinheit 26 eine individuelle Einstellung des senkrechten Abstandes zwischen Bildsensor 64 und Bildaustrittsöffnung 60 sowie eine Zentrierung des Bildsensors 64 relativ zu dem Objektiv 46. Die Einstellung des senkrechten Abstandes ermöglicht es, den Bildsensor 64 exakt im Brennpunkt bzw. in der Brennebene des Objektivs 44 zu positionieren. Außerdem kann durch die Einstellung dieses Abstandes der Abbildungsmaßstab variiert werden. Das Zentrieren des Bildsensors innerhalb der Bewegungsebene 96 macht es möglich, die beleuchtete Pixelfläche auf dem Bildsensor 66 einzustellen. Außerdem können die Pixelzeilen und Pixelspalten durch eine Rotationsbewegung 106 parallel zu einer beliebigen Objektkontur ausgerichtet werden, selbst wenn der Bildsensor 64 durch eine Rotationsbewegung um die Achse 104 verstellt wurde. Die Rotationsbewegung 106 ermöglicht es außerdem, einen Kabelabgang (hier nicht dargestellt) am Bauteilträger 66 an einer gewünschten Stelle und in einer gewünschten Richtung zu positionieren.

Trotz dieser vielfältigen Justiermöglichkeiten ist die integrierte Baueinheit aus Objektivkörper 46, Koppelstücken 70, 72 und Bauteilträger 66 sehr robust und stoßfest, so dass die Kameraeinheit 26 ohne weiteres als bildgebender Sensor für eine mitlaufende Schutzvorrichtung an der Biegepresse 10 verwendet werden kann. Darüber hinaus ist die Kameraeinheit 26 sehr kompakt und die einzelnen Justageelemente und Spannmechanismen sind gut zugänglich.

Natürlich gibt es zahlreiche Variationsmöglichkeiten. Beispielsweise könnten die Schrauben 94 in umgekehrter Richtung eingeschraubt werden, als in Figur 3 dargestellt ist, wenn man die Kontermutter 84 entsprechend kleiner und/oder mit hinreichendem senkrechtem Abstand zu dem Klemmring 90 realisiert. Anstelle des O-Rings 88 könnte prinzipiell auch ein anderes Federelement verwendet sein, um eines der Koppelstücke 70, 72 in einen Reibschluss zu bringen, der bei gelöster Kontermutter 94 ausreicht, um eine Schraubbewegung zwischen erstem und zweitem Koppelstück zu ermöglichen.

## Patentansprüche

1. Kameraeinheit zum Überwachen eines Raumbereichs, insbesondere als Teil einer mitlaufenden Schutzeinrichtung an einem bewegten Maschinenteil (12), mit einem elektronischen Bildsensor (64), der auf einem Bauteilträger (66) angeordnet ist, mit einem Objektiv (44), das einen Objektivkörper (46) aufweist, an dem zumindest ein optisches Element (48) befestigt ist, und mit einem ersten Koppelstück (70), über das der Objektivkörper (46) und der Bauteilträger (66) zu einer integrierten Baueinheit verbunden sind, wobei das erste Koppelstück (70) in der integrierten Baueinheit zumindest eine begrenzte erste Beweglichkeit (100, 102, 106) relativ zu dem Objektivkörper (46) und zumindest eine begrenzte zweite Beweglichkeit (108) relativ zu dem Bauteilträger (66) besitzt, und dass die integrierte Baueinheit zumindest einen ersten und einen zweiten lösbaren Spannmechanismus (74, 76, 84; 62, 90, 94) aufweist, um das erste Koppelstück (70), den Objektivkörper (46) und den Bauteilträger (66) relativ zueinander zu fixieren, **gekennzeichnet durch** ein zweites Koppelstück (72), das mit dem Bauteilträger (66) fest verbunden ist und das relativ zu dem ersten Koppelstück (70) beweglich ist, um die zweite Beweglichkeit (108) zu ermöglichen.

2. Kameraeinheit nach Anspruch 1, **dadurch gekennzeichnet, dass** die erste (100, 102, 106) und die zweite (108) Beweglichkeit orthogonal zueinander sind.

3. Kameraeinheit nach Anspruch 1 oder 2, **dadurch gekennzeichnet, dass** der Bildsensor (64) eine Sensorebene (98) definiert und dass die erste Beweglichkeit (100, 102, 106) eine Bewegungsebene (96) definiert, die parallel zu der Sensorebene (98) liegt.

4. Kameraeinheit nach einem der Ansprüche 1 bis 3, **dadurch gekennzeichnet, dass** die erste Beweglichkeit (100, 102, 106) eine Translations- und eine Rotationsbewegung des ersten Koppelstücks (70) relativ zu dem Objektivkörper (46) ermöglicht.

5. Kameraeinheit nach einem der Ansprüche 1 bis 4, **dadurch gekennzeichnet, dass** der Bildsensor (64) eine Sensorebene (98) definiert und dass die zweite Beweglichkeit (108) eine Bewegungsrichtung definiert, die senkrecht zu der Sensorebene (98) verläuft.

6. Kameraeinheit nach einem der Ansprüche 1 bis 5, **dadurch gekennzeichnet, dass** die zweite Beweglichkeit (108) eine kombinierte Translations- und Rotationsbewegung des ersten Koppelstücks (70) relativ zu dem Bauteilträger ermöglicht (66).

7. Kameraeinheit nach einem der Ansprüche 1 bis 6, **dadurch gekennzeichnet, dass** das erste und das zweite Koppelstück (70, 72) miteinander verschraubt sind, wobei eines der Koppelstücke ein Außengewinde (76) und das andere Koppelstück ein Innengewinde (74) aufweist, die ineinander greifen.

8. Kameraeinheit nach Anspruch 7, **dadurch gekennzeichnet, dass** der zweite Spannmechanismus eine Kontermutter (94) aufweist, die dazu ausgebildet ist, das erste und das zweite Koppelstück (70, 72) lösbar aneinander zu fixieren.

9. Kameraeinheit nach Anspruch 8, **gekennzeichnet durch** ein Federelement (88), das dazu ausgebildet ist, an einem der Koppelstücke (70) anzugreifen, um das eine Koppelstück (70) bei gelöster Kontermutter (94) relativ zu dem anderen Koppelstück (72) zu fixieren.

10. Kameraeinheit nach einem der Ansprüche 1 bis 9, **dadurch gekennzeichnet, dass** das zweite Koppelstück (72) zumindest einen konischen Passzapfen (78) aufweist, der in eine Öffnung (68) an dem Bauteilträger (66) eingreift.

11. Kameraeinheit nach einem der Ansprüche 1 bis 10, **dadurch gekennzeichnet, dass** das erste Koppelstück (70) einen vorspringenden Flanschbereich (71) aufweist und dass der erste Spannmechanismus zumindest ein erstes und ein zweites Klemmelement (62, 90) aufweist, die dazu ausgebildet sind, den vorspringenden Flanschbereich (71) lösbar einzuklemmen.

12. Kameraeinheit nach einem der Ansprüche 1 bis 11, **dadurch gekennzeichnet, dass** der Bildsensor (64) ohne Sensorgehäuse direkt auf dem Bauteilträger (66) angeordnet ist.

13. Kameraeinheit nach einem der Ansprüche 1 bis 12, **dadurch gekennzeichnet, dass** der Bauteilträger (66), das zumindest eine Koppelstück (70) und der Objektivkörper (46) den Bildsensor (64) weitgehend staubdicht umhäusen.

14. Vorrichtung zum Absichern einer Maschine (10) mit einem ersten und einem zweiten Maschinenteil (12, 14), wobei das erste Maschinenteil (12) eine Arbeitsbewegung (22) relativ zu dem zweiten Maschinenteil (14) ausführt, insbesondere zum Absichern eines stationären Press-, Stanz- oder Schneidwerkzeuges, mit einer Lichtquelle (24), mit einer Kameraeinheit (26), und mit einer Steuereinheit (30), wobei die Kameraeinheit (26) so an dem ersten Maschinenteil (12) befestigt ist, dass sie bei der Arbeitsbewegung (22) des ersten Maschinenteils (12) mitgeführt wird und dabei einen vor dem ersten Maschinenteil (12) liegenden Raumbereich (28) aufnimmt, wobei die Lichtquelle (24) gegenüber von der Kameraeinheit (26) so angeordnet ist, dass sie die Kameraeinheit (26) beleuchtet, und wobei die Steuereinheit (30) dazu ausgebildet ist, die Arbeitsbewegung (22) des ersten Maschinenteils (12) in Abhängigkeit von einem von der Kameraeinheit (26) erzeugten Signal zu stoppen, wobei die Kameraeinheit (26) nach einem der Ansprüche 1 bis 13 ausgebildet ist.

## Claims

1. A camera unit for monitoring a spatial region, in particular as part of a concurrently moving safety device on a moving machine part (12), comprising an electronic image sensor (64) arranged on a component carrier (66), comprising a lens (44) having a lens body (46), to which at least one optical element (48) is fixed, and comprising a first coupling piece (70), via which the lens body (46) and the component carrier (66) are connected to form an integrated structural unit, wherein the first coupling piece (70) in the integrated structural unit has at least one limited first mobility (100, 102, 106) relative to the lens body (46) and at least one limited second mobility (108) relative to the component carrier (66), and the integrated structural unit has at least one first and one second releasable clamping mechanism (74, 76, 84; 62, 90, 94) in order to fix the first coupling piece (70), the lens body (46) and the component carrier (66) relative to one another, **characterized by** a second coupling piece (72), which is fixedly connected to the component carrier (66) and which is moveable relative to the first coupling piece (70) in order to enable the second mobility (108).

2. The camera unit of claim 1, **characterized in that** the first (100, 102, 106) and the second (108) mobility are orthogonal with respect to one another.

3. The camera unit of claim 1 or 2, **characterized in that** the image sensor (64) defines a sensor plane (98), and the first mobility (100, 102, 106) defines a movement plane (96) lying parallel to the sensor plane (98).

4. The camera unit of any of claims 1 to 3, **characterized in that** the first mobility (100, 102, 106) enables a translational and a rotational movement of the first coupling piece (70) relative to the lens body (46).

5. The camera unit of any of claims 1 to 4, **characterized in that** the image sensor (64) defines a sensor plane (98), and the second mobility (108) defines a movement direction extending perpendicular to the sensor plane (98).

6. The camera unit of any of claims 1 to 5, **characterized in that** the second mobility (108) enables a combined translational and rotational movement of the first coupling piece (70) relative to the component carrier.

7. The camera unit of any of claims 1 to 6, **characterized in that** the first and the second coupling piece (70, 72) are screwed to one another, wherein one of the coupling pieces has an external thread (76) and the other coupling piece has an internal thread (74), which intermesh.

8. The camera unit of claim 7, **characterized in that** the second clamping mechanism has a lock nut (94) designed to fix the first and the second coupling pieces (70, 72) releasably to one another.

9. The camera unit of claim 8, **characterized by** a spring element (88) designed to engage on one of the coupling pieces (70) in order, with the lock nut (94) released, to fix one coupling piece (70) relative to the other coupling piece (72).

10. The camera unit of any of claims 1 to 9, **characterized in that** the second coupling piece (72) has at least one conical fitting pin (78) that engages into an opening (68) on the component carrier (66).

11. The camera unit of any of claims 1 to 10, **characterized in that** the first coupling piece (70) has a projecting flange region (71), and the first clamping mechanism has at least one first and one second clamp element (62, 90) designed to releasably clamp the projecting flange region (71).

12. The camera unit of any of claims 1 to 11, **characterized in that** the image sensor (64) is arranged directly on the component carrier (66) without a sensor housing.

13. The camera unit of any of claims 1 to 12, **characterized in that** the component carrier (66), the at least one coupling piece (70) and the lens body (46) house the image sensor (64) in a substantially dust-tight manner.

14. An apparatus for safeguarding a machine (10) comprising a first and a second machine part (12, 14), wherein the first machine part (12) performs an operating movement (22) relative to the second machine part (14), in particular for safeguarding a stationary pressing, stamping or cutting tool, comprising a light source (24), comprising a camera unit (26), and comprising a control unit (30), wherein the camera unit (26) is fixed to the first machine part (12) in such a way that it is concurrently moving along with the operating movement (22) of the first machine part (12) and in the process records a spatial region (28) lying in front of the first machine part (12), wherein the light source (24) is arranged opposite the camera unit (26) in such a way that it illuminates the camera unit (26), and wherein the control unit (30) is designed to stop the operating movement (22) of the first machine part (12) in a manner dependent on a signal generated by the camera unit (26), wherein the camera unit (26) is designed in accordance with any of claims 1 to 13.

## Revendications

1. Unité à caméra destinée à surveiller une zone spatiale, notamment en tant que partie d'un dispositif de protection conjointement déplacée sur une partie de machine en mouvement (12), comportant un capteur d'image électronique (64) qui est disposé sur un support de composants (66), comportant un objectif (44) qui comprend un corps d'objectif (46) sur lequel est fixé au moins un élément optique (48) et comportant une première pièce de couplage (70) par l'intermédiaire de laquelle le corps d'objectif (46) et le support de composants (66) sont reliés en formant un élément intégré, dans lequel la première pièce de couplage (70) contenue dans l'élément intégré possède au moins une première mobilité limitée (100, 102, 106) par rapport au corps d'objectif (46) et au moins une seconde mobilité limitée (108) par rapport au support de composants (66) et dans laquelle l'élément intégré comprend au moins des premier et second mécanismes de serrage amovibles (74, 76, 84 ; 62, 90, 94) afin d'immobiliser la première pièce de couplage (70), le corps d'objectif (46) et le support de composants (66) l'un par rapport à l'autre, **caractérisée par** une seconde pièce de couplage (72) qui est fermement reliée au support de composants (66) et est mobile par rapport à la première pièce de couplage (70) afin de permettre la seconde mobilité (108).

2. Unité à caméra selon la revendication 1, **caractérisée en ce que** les première (100, 102, 106) et seconde (108) mobilités sont orthogonales l'une à l'autre.

3. Unité à caméra selon la revendication 1 ou 2, **caractérisée en ce que** le capteur d'image (64) définit un plan de capteur (98) et **en ce que** la première mobilité (100, 102, 106) définit un plan de mouvement (96) qui est parallèle au plan de capteur (98).

4. Unité à caméra selon l'une quelconque des revendications 1 à 3, **caractérisée en ce que** la première mobilité (100, 102, 106) permet un mouvement de translation et de rotation de la première pièce de couplage (70) par rapport au corps d'objectif (46).

5. Unité à caméra selon l'une quelconque des revendications 1 à 4, **caractérisée en ce que** le capteur d'image (64) définit un plan de capteur (98) et **en ce que** la seconde mobilité (10) définit une direction de mouvement qui s'étend perpendiculairement au plan de capteur (98).

6. Unité à caméra selon l'une quelconque des revendications 1 à 5, **caractérisée en ce que** la seconde mobilité (108) permet un mouvement combiné de translation et de rotation de la première pièce de couplage (70) par rapport au support de composants (66).

7. Unité à caméra selon l'une quelconque des revendications 1 à 6, **caractérisée en ce que** les première et seconde pièces de couplage (70, 72) sont vissées l'une avec l'autre, dans lequel l'une des pièces de couplage présente un filetage externe (76) et l'autre pièce de couplage présente un filetage interne (74) qui s'engrènent l'un dans l'autre.

8. Unité à caméra selon la revendication 7, **caractérisée en ce que** le second mécanisme de serrage comporte un contre-écrou (94) qui est réalisé de manière à fixer l'une à l'autre de manière amovible les première et seconde pièces de couplage (70, 72).

9. Unité à caméra selon la revendication 8, **caractérisée par** un élément à ressort (88) qui est réalisé de manière à venir en prise avec l'une des pièces de couplage (70) de manière à fixer ladite pièce de couplage (70) par rapport à l'autre pièce de couplage (72) lorsque le contre-écrou (94) est desserré.

10. Unité à caméra selon l'une quelconque des revendications 1 à 9, **caractérisée en ce que** la seconde pièce de couplage (72) comprend au moins un goujon conique (78) qui s'insère dans une ouverture (68) ménagée dans le support de composants (66).

11. Unité à caméra selon l'une quelconque des revendications 1 à 10, **caractérisée en ce que** la première pièce de couplage (70) comprend une zone formant bride faisant saillie (71) et **en ce que** le premier mécanisme de serrage comprend au moins des premier et second éléments de blocage (62, 90) qui sont réalisés afin de bloquer de manière amovible la zone formant bride faisant saillie (71).

12. Unité à caméra selon l'une quelconque des revendications 1 à 11, **caractérisée en ce que** le capteur d'image (64) est directement disposé sur le support de composants (66) sans boîtier de capteur.

13. Unité à caméra selon l'une quelconque des revendications 1 à 12, **caractérisée en ce que** le support de composants (66), l'au moins une pièce de couplage (70) et le corps d'objectif (46) enserrent de manière sensiblement étanche à la poussière le capteur d'image (64).

14. Dispositif destiné à sécuriser une machine (10) comportant des première et seconde parties de machine (12, 14), dans lequel la première partie de machine (12) effectue un mouvement de travail (22) par rapport à la seconde partie de machine (14), notamment pour sécuriser un outillage fixe de pressage, de poinçonnage ou de découpe, comportant une source de lumière (24), une unité à caméra (26) et une unité de commande (30), dans lequel l'unité à caméra (26) est fixée à la première partie de machine (12) de manière à ce qu'elle soit déplacée conjointement lors du mouvement de travail (22) de la première partie de machine (12) et qu'elle reçoive ainsi une région spatiale (28) située à l'avant de la première partie de machine (12), dans lequel la source de lumière (24) est disposée par rapport à l'unité à caméra (26) de manière à éclairer l'unité à caméra (26) et dans lequel l'unité de commande (30) est réalisée de manière à interrompre le mouvement de travail (22) de la première partie de machine (12) en fonction d'un signal généré par l'unité à caméra (26), dans lequel l'unité à caméra (26) est réalisée selon l'une quelconque des revendications 1 à 13.
